**Europäisches Patentamt**

(19) **European Patent Office**

**Office européen des brevets**

(11) Veröffentlichungsnummer: **0 151 280**

**B1**

(12) # EUROPÄISCHE PATENTSCHRIFT

(45) Veröffentlichungstag der Patentschrift:
**29.06.88**

(51) Int. Cl.⁴: **H 04 Q 7/04,** H 04 B 1/66

(21) Anmeldenummer: **84115459.4**

(22) Anmeldetag: **14.12.84**

(54) Zeitmultiplexverfahren für ein digitales Zellenfunksystem.

(30) Priorität: **03.02.84 DE 3403715**

(43) Veröffentlichungstag der Anmeldung:
**14.08.85 Patentblatt 85/33**

(45) Bekanntmachung des Hinweises auf die Patenterteilung:
**29.06.88 Patentblatt 88/26**

(84) Benannte Vertragsstaaten:
**DE FR GB IT**

(56) Entgegenhaltungen:
**EP-A-0 064 686**
**GB-A-2 111 732**

**ARCHIV FÜR ELEKTRONIK UND
ÜBERTRAGUNGSTECHNIK, Band 37, Nr. 5/6,
Mai/Juni 1983, Seiten 191-198, WÜRZBURG, (DE). F.
SEIFERT et al.: "Spread-Spektrum-Systeme mit
akustischen Oberflächenwellen-Bauelementen".**

(73) Patentinhaber: **Licentia Patent- Verwaltungs- GmbH,
Theodor- Stern- Kai 1, D-6000 Frankfurt/Main 70
(DE)**

(72) Erfinder: **Kuchenbecker, Hans- Peter, Dr.- Ing.,
Teutonenweg 13, D-7910 Neu- Ulm (DE)**
Erfinder: **Schaller, Wolfgang, Dr.- Ing., Am Roten
Berg 51, D-7900 Ulm (DE)**

(74) Vertreter: **Schulze, Harald Rudolf, Dipl.- Ing.,
Licentia Patent- Verwaltungs- GmbH Theodor-
Stern- Kai 1, D-6000 Frankfurt/Main 70 (DE)**

EP 0 151 280 B1

## Beschreibung

Die Erfindung betrifft ein Zeitmultiplexverfahren für ein digitales Zellenfunksystem nach dem Oberbegriff des Anspruchs 1, wie es aus der DE-A-31 18 018 und der DE-A-31 39 408 bekannt ist.

Zellenfunksysteme, z. B. für den öffentlichen beweglichen Landfunk, benötigen für die Funkübertragung zwischen den mobilen Teilnehmern und den Feststationen je nach Verkehrsaufkommen eine größere Zahl von Kanälen pro Feststation. Bei den herkömmlichen DE-A-31 18 018 ist ein Zeitmultiplexverfahren (TDMA) vorgeschlagen, so daß an die Stelle der Frequenzkanäle Zeitkanäle (Zeitschlitze) zur Übertragung der verschiedenen gleichzeitigen mit einem orthogonalen Zeichensatz { $c_i(t)$ }. Damit ist eine Spektrumsverbreiterung verbunden (Spreizung). Diese ermöglicht es, mit Hilfe von Empfangskorrelatoren für die einzelnen Zeichen des Zeichensatzes eine zeitliche Auflösung der einzelnen Wellen im Mehrwegeempfangsfeld zu erreichen und dadurch die Intersymbolinterferenz trotz hoher Übertragunssrate zu vermeiden. Weitere Einzelheiten können der zitierten Offenlegungsschrift entnommen werden.

Wegen der Spreizung zur Auflösung des Mehrwegeinterferenzfeldes benötigt das TDMA-Verfahren mehr Bandbreite pro Kanal als vergleichbare FDMA-Verfahren. Dieser Nachteil läßt sich ausgleichen durch Verkleinerung des örtlichen Frequenzwiederholabstandes. An die Stelle des üblichen 7-er Schemas der Zellen-Clusterung wird ein 1-er oder 3-er Schema gesetzt. Die verminderte örtliche Entkopplung der Funkzellen mit gleichen Kanälen muß dann durch eine erhöhte Gleichkanalunterdrückung des Modulationsverfahrens ausgeglichen werden. Diese Forderung kann in gewissen Grenzen als Nebeneffekt der Spektrumsspreizung realisiert werden.

Gemäß dem Stand der Technik werden fremde Gleichkanalsignale in den Empfangsstationen dadurch mehr oder weniger unterdrückt, da die Empfangszeitpunkte der einzeln aufgelösten Pfade des Nutzsignals (Mehrwegeprofil bzw. Kanalstoßantwort) mit denen des nichtsynchronisierten Fremdsignals in der Regel nicht oder nicht vollständig übereinstimmen. Nach der DE-A-31 39 408 werden die Beträge der herausragenden Maxima des Mehrwegeprofils hinter den Empfangskorrelatoren für die einzelnen Zeichen integriert. Es wurde auch vorgeschlagen, die Integration kohärent vorzunehmen. Im Interesse einer hohen Frequenzökonomie ist anzustreben, daß die Gleichkanalunterdrückung möglichst groß ist.

Aufgabe der Erfindung ist es, ein digitales Zellenfunksystem der eingangs genannten Art dahingehend zu verbessern, daß mit geringem Aufwand eine erhöhte Gleichkanalunterdrückung erfolgt.

Die Erfindung ist im Patentanspruch 1 gekennzeichnet. Die weiteren Ansprüche beinhalten vorteilhafte Weiterbildungen bzw. Ausführungen der Erfindung.

Die Erfindung wird im folgenden näher erläutert.

Um die gesamte empfangene Signalenergie zusammenzufassen, ist es besser, statt der Integration der Maxima eine Korrelation mit der Kanalstoßantwort vorzunehmen, wie es die Erfindung vorsieht. Dabei werden sämtliche aufgelösten Zellen der dispergierten Kanalstoßantwort h(t) nach Betrag (Gewichtung) und Phase (Kohärenz der Integration) für das Signal verwendet.

Jede in einem Zeitschlitz übertragene digitale Nachricht ist durch eine Synchronisationspräambel mit guten Autokorrelationseigenschaften eingeleitet. Diese Präambel ist auch in den Empfangsstationen gespeichert. Die Kanalstoßantwort h(t) wird durch Korrelation der einlaufenden mit der gespeicherten Synchronisationspräambel ermittelt und gespeichert. Um dies auch bei Gleichkanalstörungen hinreichend genau ausführen zu können, muß die Präambel verlängert werden, z. B. auf 256 Chip. (1 Chip = 1 Bit des gespreizten Signals). Sämtliche Korrelationsvorgänge werden in einem digitalen Signalprozessor durchgeführt. Die ermittelte Kanalstoßantwort liegt also mit der gleichen Abtastrate vor, wie das Signal.

Das erfindungsgemäße Zellenfunksystem arbeitet vorzugsweise mit Restseitenbandmodulation und Quadraturempfängern.

Daher ist auch die ermittelte Kanalstoßantwort komplex. Sie enthält den Einfluß des Funkkanals einschließlich der Wirkung der Sende- und Empfangsfilter und der Auswirkung der Restseitenbandmodulation.

Erfindungsgemäß wird nun das empfangene Signal s (t) mit der ermittelten und gespeicherten Kanalstoßantwort h (t) korreliert, wodurch die vorgenannten Einflüsse in weitem Umfang unterdrückt werden. Um Operationen im digitalen Signalprozessor zu sparen, erfolgt diese Korrelation

$$\tilde{s}(t) = s(t)^* h(t)$$

vor der Korrelation mit dem Zeichensatz { $c_i(t)$ }. Sie braucht dann nur einmal durchgeführt zu werden. Die Hauptersparnis ergibt sich daraus, daß dann die Korrelationsfunktion $Z_i$ pro Zeichencode $c_i$ nur für einen Zeitpunkt berechnet werden muß:

$$Z_i = [\tilde{s}(t)^* c_i(t)]_{t=t_0}.$$

(Als gesendet wird dasjenige Zeichen geschätzt, dessen Referenzcode $c_i$ den maximalen Korrelationswert $Z_{Max}$ ergibt).

Zur weiteren Entkopplung verwenden in Weiterbildung der Erfindung benachbarte Zellen unterschiedliche Synchroncodes (Präambeln). Empfangsstationen haben alle diese Codes gespeichert. Bei der ersten Kontaktaufnahme zwischen mobilen und ortsfesten Stationen müssen sämtliche Synchroncodes durchprobiert werden. Um dies zu vermeiden, kann aber auch in Organisationsweitschlitzen ein gemeinsamer Synchroncode beibehalten werden, wobei dann benachbarte Zellen zeitlich entkoppelt werden müssen.

Die Korrelation mit der Kanalstoßantwort entspricht dem matched filter Konzept. Dies ergibt den optimalen Empfänger, wenn die Störung weißes Gaußsches Rauschen ist. Da die Störung durch benachbarte Zellen, in denen die gleichen Zeitschlitze verwendet werden, nicht von vornherein diese Voraussetzung erfüllt, ist es zweckmäßig sie anzunähern durch Verwendung unterschiedlicher Zeichencodesätze in benachbarten Zellen, wie in der DE-A-31 18 018 bereits vorgeschlagen. Im Idealfall tritt dann die Störung nach der Zeichenkorrelation wie Rauschen auf und wird mit dem vollen Prozeßgewinn des Korrelators unterdrückt. In der Realität lassen sich allerdings keine vollständig entkoppelten (nicht korrelierende) Sätze von Codes finden, so daß die Störung etwas größer ist.

Durch die Verwendung dieses Codemultiplexes wird die näherungsweise Orthogonalisierung von Nutzsignal und Störsignal, die ja teilweise schon durch die unterschiedlichen Kanalstrukturen erzeugt wird, verbessert. Bei stark dispersiven Kanälen (Kontinuum sehr vieler Pfade) ist die Maßnahme nicht nötig.

Eine weitere Verbesserungsmaßnahme, die aber wegen ihres höheren Rechenaufwandes im Signalprozessor nur als Rückfallebene anzusehen ist, besteht in der Verwendung der Kanalstoßantworten sowohl des Nutzsignalkanals, als auch der störenden Kanäle. Bei Verwendung unterschiedlicher Präambeln in benachbarten Zellen kann die Kanalstoßantwort für alle umgebenden Zellen, die gleiche Kanäle (Zeitschlitze) benutzen, vom Empfänger ermittelt werden. Es ist dem Empfänger daher möglich, die optimale Übertragungsfunktion für ein bekanntes Nutzsignal (Zeichensatz) in Gegenwart von Störungen mit bekannter Struktur zu ermitteln. Im Anwendungsfall wird mit einer Kanalstoßantwort korreliert, die aus der des Nutzkanals hervorgeht, indem alle Stellen, wo die Summe der Störer besonders stark ist, entsprechend abgesenkt werden.

## Patentansprüche

1. Zeitmultiplexverfahren für ein digitales Zellenfunksystem mit ortsfesten Sende/Empfangsstationen und mit beweglichen Sende/Empfangsstationen, die über Funk im Zeitmultiplex mit Vielfachzugriff mit den ortsfesten Stationen digitale, jeweils durch eine Synchronisationspräambel eingeleitete Nachrichten, die mit einem Satz von orthogonalen Zeichencodes gespreizt sind, austauschen können, wobei mehrere ortsfeste Stationen von einer Leitstelle gesteuert werden, von denen wiederum mehrere mit einer Überleiteinrichtung zu einem Fernsprechnetz verbunden sind, dadurch gekennzeichnet, daß die Synchronisationspräambel verlängert ist, daß in den Empfangsstationen in jedem empfangenen Zeitschlitz die gesamte Kanalstoßantwort nach Betrag und Phase durch Korrelation der einlaufenden mit der gespeicherten Synchronisationspräambel ermittelt und gespeichert wird, und daß die empfangenen Nachrichtensignale mit der so ermittelten und gespeicherten Kanalstoßantwort korreliert werden.

2. Zeitmultiplexverfahren nach Anspruch 1, dadurch gekennzeichnet, daß die Korrelation mit der Kanalstoßantwort vor der Korrelation mit den orthogonalen Zeichencodes erfolgt.

3. Zeitmultiplexverfahren nach Anspruch 1, dadurch gekennzeichnet, daß benachbarte Zellen unterschiedliche Synchronisationspräambeln aussenden.

4. Zeitmultiplexverfahren nach Anspruch 1, dadurch gekennzeichnet, daß benachbarte Zellen unterschiedliche Sätze von orthogonalen Zeichencodes verwenden.

5. Zeitmultiplexverfahren nach Anspruch 3, dadurch gekennzeichnet, daß in den Empfangsstationen die Kanalstoßantwort für alle empfangenen Zellen, die gleiche Zeitschlitze benutzen, ermittelt wird, und daß in der Kanalstoßantwort des Nutzkanals alle Stellen, wo die Summe von Störern besonders groß ist, entsprechend abgesenkt werden.

## Claims

1. Time division multiplex method for a digital cellular radio system with fixed transmitting-receiving stations and with mobile transmitting-receiving stations which can exchange digital communications, which are spread by a set of orthogonal symbol codes and each introduced by a synchronising preamble, with the fixed stations by radio in time division multiplex with multiple access, wherein several fixed stations are controlled from one master station, of which in turn several are connected by a relay station with a telephone dialling network, characterised thereby, that the synchronising preamble is prolonged, that the entire channel burst reply in each received time slot is determined and stored in the receiving stations according to amount and phase through correlation of the incoming with the stored synchronising preamble and that the received communications signals are correlated with the channel burst reply thus determined and stored.

2. Time division multiplex method according to claim 1, characterised thereby, that the correlation with the channel burst reply takes place before the correlation with the orthogonal symbol codes.

3. Time division multiplex method according to claim 1, characterised thereby, that neighbouring cells emit different synchronising preambles.

4. Time division multiplex method according to claim 1, characterised thereby, that neighbouring cells use different sets of orthogonal symbol codes.

5. Time division multiplex method according to claim 3, characterised thereby, that the channel burst reply for all received cells, which utilise like time slots, is determined in the receiving stations and that all places, where the sum of disturbers is especially great, are lowered correspondingly in the channel burst reply of the useful channel.

## Revendications

1. Procédé de multiplexage dans le temps pour un système radioélectrique cellulaire, numérique, comprenant des stations fixes d'émission/de réception et des postes mobiles d'émission/de réception, qui peuvent échanger, par radio, en multiplexage temporel avec accès multiples, des messages numériques, commençant chaque fois par un préambule de synchronisation, messages qui sont étalés à l'aide d'un jeu de codes de caractères orthogonaux, plusieurs stations fixes étant commandées par ce que l'on appelle un superviseur et plusieurs des stations ainsi commandées étant connectées par un dispositif de transfert à un réseau téléphonique, caractérisé en ce que le préambule de synchronisation est prolongé, en ce que, dans les stations de réception, dans chaque tranche temporelle reçue, toute la réponse impulsionnelle de canal est déterminée et mémorisée en valeur et en phase, par corrélation du préambule de synchronisation entrant avec le préambule de synchronisation mémorisé, et que les signaux de message reçus sont corrélés avec la réponse impulsionnelle de canal ainsi déterminée et mémorisée.

2. Procédé selon la revendication 1, caractérisé en ce que la corrélation avec la réponse impulsionnelle de canal s'effectue avant la corrélation avec les codes de caractères orthogonaux.

3. Procédé selon la revendication 1, caractérisé en ce que des cellules voisines émettent des préambules de synchronisation différents.

4. Procédé selon la revendication 1, caractérisé en ce que des cellules voisines utilisent des jeux différentes de codes de caractères orthogonaux.

5. Procédé selon la revendication 3, caractérisé en ce que, dans les stations de réception, la réponse impulsionnelle de canal est déterminée pour toutes les cellules reçues utilisant les mêmes tranches temporelles et que, dans la réponse impulsionnelle du canal utile, tous les endroits où la somme de brouilleurs est particulièrement grande, sont abaissés en conséquence.